Europäisches Patentamt

(19) European Patent Office

Office européen des brevets

(11) **EP 0 751 864 B1**

## (12) FASCICULE DE BREVET EUROPEEN

(45) Date de publication et mention
de la délivrance du brevet:
**10.06.1998 Bulletin 1998/24**

(21) Numéro de dépôt: **95914438.7**

(22) Date de dépôt: **29.03.1995**

(51) Int. Cl.$^6$: **B29C 65/00**, C08J 5/12,
C08L 77/00

(86) Numéro de dépôt international:
**PCT/FR95/00397**

(87) Numéro de publication internationale:
**WO 95/26868 (12.10.1995 Gazette 1995/43)**

(54) **PROCEDE D'ASSEMBLAGE PAR SOUDAGE DE PIECES EN COMPOSITIONS THERMOPLASTIQUES A BASE DE POLYAMIDES**

VERSCHWEISSUNGSVERFAHREN ZUM VERBINDEN VON KÖRPERN AUS THERMOPLASTISCHEN POLYAMIDZUSAMMENSETZUNGEN

WELDING METHOD FOR ASSEMBLING PARTS MADE OF POLYAMIDE-BASED THERMOPLASTIC COMPOSITIONS

(84) Etats contractants désignés:
**DE ES FR GB IT PT**

(30) Priorité: **30.03.1994 FR 9404077**

(43) Date de publication de la demande:
**08.01.1997 Bulletin 1997/02**

(73) Titulaire: **NYLTECH FRANCE**
**69192 Saint-Fons (FR)**

(72) Inventeurs:
• **ADNOT, Yannick**
**F-81000 Albi (FR)**
• **BONIN, Yves**
**F-69530 Brignais (FR)**
• **BORDEREAU, Vincent**
**US-Boston MA 02116 (US)**

(74) Mandataire:
**Esson, Jean-Pierre et al**
**RHODIA CHIMIE**
**Direction de la Propriété Industrielle,**
**Centre de Recherches des Carrières,**
**BP 62**
**69192 Saint-Fons Cédex (FR)**

(56) Documents cités:
EP-A- 0 070 001     EP-A- 0 366 382
DE-A- 1 461 842     DE-A- 3 200 428
LU-A-  58 271

• **PLASTICS ENGINEERING, vol. 36, no. 8, Août 1980 MANCHESTER, NEW HAMPSHIRE, US, pages 20-23, JAMES MENGASON 'Vibration welding-shaking up the status quo in joining plastics' voir page 20, colonne de gauche, alinéa 1 - alinéa 3; tableau 1 voir page 23, colonne de gauche, alinéa 5**
• **ENGINEERING. (INCL. MACHINE SHOP MAGAZINE), vol. 218, no. 6, Juin 1978 LONDON GB, pages 1-8, 'Technical file No 54 Ultrasonic welding of plastics' voir page 5, colonne de droite, alinéa 1; tableaux 1,2**
• **DATABASE WPI Week 8604 Derwent Publications Ltd., London, GB; AN 86-023536 & JP-A-60 141 529 (MITSUBISHI MONSANTO KK, SANKYO KASEI KK), 26 Juillet 1985 voir abrégé**
• **PATENT ABSTRACTS OF JAPAN vol. 17 no. 551 (C-1117), 5 Octobre 1993 & JP,A,05 156144 (KAO CORP) 22 Juin 1993, voir abrégé**
• **DATABASE WPI Week 8507 Derwent Publications Ltd., London, GB; AN 85-041526 & JP-A-60 000 938 (YG CHASHIZUYAMAEN), 7 Janvier 1985 voir abrégé**
• **KUNSTSTOFFE, vol. 75, no. 6, Juin 1985 MUNCHEN DE, pages 315-320, ING. (GRAD.) W. LAND, DIPL.-ING. E. ERLENKÄMPER 'Erfahrungen beim Schweissen von Formteilen aus Thermoplasten' voir le document en entier**

EP 0 751 864 B1

## Description

La présente invention concerne un procédé d'assemblage par soudage de pièces pour former un article.

Elle concerne plus particulièrement un procédé d'assemblage par soudage de pièces comprenant des surfaces de soudage en compositions thermoplastiques à base de polyamides semicristallins.

Des articles en compositions thermoplastiques sont de plus en plus utilisés dans tous les domaines, notamment les équipements électriques, les appareils électroménagers, les véhicules automobiles, par exemple. Les techniques de réalisation de ces articles sont généralement des procédés de moulage par injection, notamment quand les compositions thermoplastiques sont à base de polyamides. Toutefois, cette technique de mise en forme ne permet pas ou difficilement de réaliser des formes complexes, notamment quand l'article est un corps creux. En effet, la conception des moules devient souvent très complexe et difficilement réalisable. Par exemple, dans le cas de corps creux, ces articles ne peuvent être réalisés en une seule pièce qu'avec la mise en oeuvre des techniques de moulage par noyaux fusibles. Toutefois, ces techniques ne sont pas économiques.

Pour ces raisons, ces articles sont généralement réalisés par moulage par injection de plusieurs pièces qui sont ensuite assemblées entre elles.

Cet assemblage peut être réalisé par différents procédés, tels qu'assemblage mécanique, par exemple, emboîtement, assemblage par collage ou assemblage par soudage.

Ce dernier procédé est notamment utilisé pour la réalisation d'articles dont les conditions d'utilisation sont sévères, tels que les dispositifs partis du moteur d'un véhicule automobile ou devant être disposés sous le capot d'un tel véhicule. Pour de tels articles, il est nécessaire que l'assemblage des pièces ne génère pas ou pratiquement pas de point faible d'un point de vue des propriétés de résistance mécanique notamment.

Dans le cas d'articles réalisés en composition de matières plastiques, notamment avec une matrice en matière synthétique de type polyamide, les propriétés mécaniques du matériau au niveau des lignes ou surfaces de soudure et plus généralement de la soudure sont plus faibles que celles intrinsèques du matériau ou des autres parties de l'article.

Un des objectifs de l'invention est de remédier à cet inconvénient en proposant un procédé d'assemblage par soudure de pièces dont au moins les surfaces de soudure sont réalisées en une composition en matières plastiques particulières permettant d'obtenir une soudure présentant une perte des propriétés mécaniques par rapport aux propriétés du matériau intrinsèque ou des autres parties de la pièce, faible et moins élevée que celle observée avec les compositions en matière plastique utilisées actuellement;

A cet effet, l'invention a pour objet un procédé d'assemblage de pièces pour la réalisation d'articles, par soudure de celles-ci entre elles, au moins une de ces pièces comprenant une surface de soudure réalisée en une composition de matières plastiques de type polyamide, consistant à porter les surfaces à souder de chaque pièce à une température supérieure au moins au point de ramollissement de la composition de matières plastiques et à mettre en contact les dites surfaces à souder avant, après ou de manière concomitante avec le chauffage des surfaces.

Le procédé de l'invention se caractérise en ce que la composition de matières plastiques comprend une matrice en polyamide(s) semicristallin(s) et au moins un polyamide semi-aromatique amorphe, la concentration pondérale du polyamide semi-aromatique amorphe est comprise entre 5% en poids et 40% en poids, avantageusement entre 5% et 25% en poids par rapport au poids total de matières thermoplastiques.

Par surface de soudure ou surface à souder, il faut entendre les parties des pièces qui seront mises en contact et qui formeront le joint ou la ligne de soudure. Plus particulièrement, la surface de soudure désigne au moins la partie des surfaces mises en contact qui sera portée à une température supérieure à sa température de ramollissement. Ainsi, cette surface de soudure pourra être uniquement un cordon formé ou rapporté sur une des surfaces d'une pièce.

Selon une caractéristique préférentielle de l'invention, la composition a un indice de viscosité supérieure à 150 ml/g, avantageusement compris entre 160 et 230 ml/g.

L'indice de viscosité est mesuré selon la méthode de la norme ISO 307-1984 sur une solution comprenant 0,5g de polyamide soluble dans 100 ml de méta-crésol ou dans 100ml d'acide formique à 90%.

Le degré de viscosité désiré de la composition peut être obtenu soit par utilisation comme matières premières d'un polyamide semicristallin de viscosité élevée, soit par augmentation de la viscosité de la composition pu exemple par post condensation en phase solide ou liquide en présence de catalyseurs ou non des matières plastiques constituant la composition ou par addition de composés polyfonctionnels pour provoquer une réticulation. Cette élévation postérieure de la viscosité peut être conduite sur le polyamide semicristallin avant mélange avec le polyamide semi-aromatique amorphe, ou de manière plus avantageuse par traitement de la composition comprenant au moins le polyamide semicristallin et le polyamide semi-aromatique amorphe.

Par polyamide semicristallin convenable pour l'invention on entend les polymères obtenus par action de polycondensation de diacides carboxyliques aliphatiques saturés ayant de 6 à 12 atomes de carbone tels que, par exemple l'acide adipique, acide azélaïque, acide sébacique, acide dodécanoïque ou un mélange de ceux-ci avec des diamines biprimaires de préférence aliphatiques saturées linéaires ou ramifiées ayant de 4 à 12 atomes de carbone telles que, par exemple l'hexaméthylène diamine, la triméthylhexaméthylène diamine, la tétraméthylène diamine, la m-xylène diamine ou un mélange de celles-ci ; les polyamides obtenus soit par homopolycondensation directe d'acide ω-aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de ces polyamides ou leurs copolymères.

A titre d'illustration des polyamides obtenus par polycondensation de diacides et de diamines, on citera par exemple :

- le Nylon 4,6 (polymère de tétraméthylènediamine et d'acide adipique),
- le Nylon 6,6 (polymère d'hexaméthylènediamine et d'acide adipique),
- le Nylon 6,9 (polymère d'hexaméthylènediamine et d'acide azélaïque),
- le Nylon 6,10 (polymère d'hexaméthylènediamine et d'acide sébacique),
- le Nylon 6,12 (polymère d'hexaméthylènediamine et d'acide dodécanedioïque).

A titre d'illustration des polyamides obtenus par homopolycondensation qui peuvent convenir, on citera :

- le Nylon 4 (polymère d'acide amino-4 butanoïque ou de γ-butyrolactame),
- le Nylon 5 (polymère d'acide amino-5 pentanoïque ou de δ-amylolactame),
- le Nylon 6 (polymère d'ε-caprolactame),
- le Nylon 7 (polymère d'acide amino-7 heptanoïque),
- le Nylon 8 (polymère de capryllactame),
- le Nylon 9 (polymère d'acide amino-9 nonanoïque),
- le Nylon 10 (polymère d'acide amino-10 décanoïque),
- le Nylon 11 (polymère d'acide amino-11 undécanoïque),
- le Nylon 12 (polymère d'acide amino-12 dodécanoïque ou de laurylactame).

A titre d'illustration des copolyamides, on citera par exemple :

- le Nylon 6,6/6,10 (copolymère d'hexaméthylènediamine, d'acide adipique et d'acide sébacique),
- le Nylon 6,6/6 (copolymère d'hexaméthylènediamine, d'acide adipique et de caprolactame).

Les polyamides préférés de l'invention sont les polyamides 6.6, les polyamides 6 et les copolyamides 66/6.

Les polyamides semi-aromatiques amorphes convenables pour l'invention sont notamment obtenus par polycondensation d'un ou d'un mélange de diacides aromatiques tels que les isomères d'acides phtaliques, avec une ou un mélange de diamines aliphatiques ou cycloaliphatiques comprenant de 4 à 20 atomes de carbone telles que l'hexaméthylène diamine ou ses dérivés substitués par un à trois radicaux aliphatiques.

Par diacides aromatiques, il faut comprendre les composés dont les groupements carboxyliques sont liés à un noyau aromatique, tel que phényle ou naphtalène. Comme exemple de diacides aromatiques on peut citer les acides isophtaliques ou téréphtaliques.

Sans sortir du cadre de l'invention, le mélange de diacides peut également comprendre des diacides aliphatiques tels que l'acide adipique.

Le terme diamines aliphatiques englobe les composés qui comprennent deux fonctions amines liées directement à un radical aliphatique ou cycloaliphatique telles que l'hexaméthylène diamine, la triméthylhexaméthylène diamine, par exemple.

Les polyamides semi-aromatiques préférés de l'invention sont ceux obtenus à partir :

- d'acide isophtalique,
- d'acide téréphtalique,
- d'un mélange d'acide isophtalique et d'acide téréphtalique , ou
- d'un mélange d'acides isophtalique, téréphtalique et adipique
avec les diamines citées ci-dessus.

Des polyamides semi-aromatiques amorphes également convenables pour l'invention sont ceux obtenus par polycondensation de diacides aromatiques et mélanges de diacides décrits ci-dessus et de méthyl-2 pentaméthylène diamine ou un mélange de cette diamine avec de l'hexaméthylène diamine et/ou de la triméthylhexaméthylène diamine.

De manière générale, les polyamides semi-aromatiques amorphes convenables pour l'invention sont ceux qui présentent une concentration pondérale en phase cristalline inférieure à 10% en poids par rapport à la totalité du polyamide semi-aromatique.

Les compositions thermoplastiques contiennent avantageusement des charges de renforcement minérales ou organiques telles que par exemple des fibres comme fibres de verre, fibres en matière synthétique thermodurcissable ou présentant un point de fusion supérieur à 325°C, fibres de carbone et/ou des poudres minérales telles que talc, mica, kaolin, par exemple, ou un mélange de celles-ci.

Elle peut également comprendre différents additifs usuellement ajoutés dans les compositions thermoplastiques tels que stabilisants thermiques, plastifiants, ignifugeants, antioxydants, lubrifiants ou autres additifs conventionnels.

Le mélange des matières thermoplastiques peut être réalisé soit par mélange des deux polyamides sous forme liquide ou sous forme de granulé, ou addition du polyamide semi-aromatique amorphe dans le polyamide semicristallin fondu.

Les compositions sont généralement obtenues par mélange des différents additifs et matières thermoplastiques dans une extrudeuse mono ou double vis selon les techniques habituelles. La composition ainsi obtenue, également appelée compound, est produite avantageusement sous forme de granulés obtenus par coupure d'un ou plusieurs joncs formés en sortie d'extrudeuse.

Les pièces ou parties d'articles sont obtenues par mise en forme du compound par des techniques habituelles telles que moulage par injection, injection soufflage, injection gaz, injection compression, injection multimatières ou analogue.

Les pièces ainsi formées comprennent, conformément au procédé de l'invention, une surface de soudure présentant une configuration déterminée en fonction du procédé de soudure qui sera utilisé pour son assemblage avec une ou plusieurs autres pièces pour ainsi former un article.

Les procédés de soudure de pièces en composition de matières thermoplastiques généralement utilisés sont des techniques qui amènent les surfaces à assembler à une température au moins supérieure à celle de ramollissement de la matière thermoplastique ou plus généralement à une température voisine de la température de fusion de la matière thermoplastique, à mettre en contact les deux surfaces à assembler, de préférence, sous une certaine pression avant, de manière concomitante ou après le chauffage des surfaces à assembler, et à refroidir ces surfaces.

Comme techniques de soudure connues et convenables pour l'invention, on peut citer à titre d'exemple :

- la soudure par ultrasons : les surfaces sont portées à la température voulue par les ultrasons,
- la soudure par vibration : les surfaces sont mises en contact et en vibration l'une par rapport à l'autre, le frottement entre les surfaces provoquant l'échauffement et le ramollissement de la matière,
- la soudure par miroir chauffant : un miroir chauffé est disposé entre les surfaces de soudure, puis retiré quand celles-ci ont atteint la température désirée. Les surfaces sont alors mises en contact sous une pression déterminée.
- La soudure par Infrarouge : Technique semblable à celle du miroir chauffant, la source de chaleur étant un émetteur de rayons infrarouges.

La géométrie des surfaces à souder est déterminée selon la forme de la pièce et la technique employée.

A titre d'exemple, le brevet US 4 919 987 décrit des formes de surfaces de soudure convenables pour le procédé de soudure par vibration. Les surfaces décrites peuvent s'emboîter. Cet emboîtement qui doit présenter un jeu suffisant pour permettre une vibration d'une amplitude déterminée, consiste généralement en un canal prévu sur une surface, ce canal est destiné à recevoir une nervure faisant joint de soudure, prévue sur l'autre surface. Ainsi, lors du soudage les particules arrachées aux surfaces seront piégées dans le canal, et les bavures provoquées par la mise en contact des surfaces sous une certaine pression seront contenues dans ledit canal.

Selon un mode de réalisation préféré de l'invention les pièces sont moulées avec une composition thermoplastique conforme à la définition décrite ci-dessus.

Toutefois, sans pour cela sortir du cadre de l'invention, il est possible de réaliser des pièces avec une autre matière telle qu'une autre composition thermoplastique ou un métal, et d'assembler sur ces pièces des surfaces de soudure réalisées en une composition conforme à la présente invention soit directement lors du moulage de la pièce ou par tout autre moyen tel que fixations mécaniques, collage, par exemple,

Les soudures réalisées avec des surfaces de soudure conformes à l'invention présentent des propriétés mécaniques, notamment de rupture à la traction plus élevées que celles obtenues avec des compositions thermoplastiques ne contenant pas de polyamide semi-aromatique amorphe. En outre, le pourcentage de perte de propriétés mécaniques par rapport à celles des parties non soudées est inférieur à celui constaté avec des compositions sans polyamide semi-aromatique amorphe.

Par ailleurs, le matériau au niveau de la soudure présente une meilleure résistance au vieillissement que celle du matériau intrinsèque. Ce phénomène n'est pas observé avec les matériaux classiques ne contenant pas de polyamide amorphe.

D'autres détails et avantages de l'invention seront illustrés par les exemples de réalisation donnés ci-dessous uniquement à titre indicatif .

Les compositions selon l'invention sont réalisées selon un procédé classique de mélange des composants.

Ainsi, la composition peut être obtenue par mélange à sec et à température ambiante des granulés de polyamide semicristallin et des granulés de polyamide semi-aromatique amorphe.

D'autres constituants peuvent être ajoutés à ce pré-mélange tels que des stabilisants, plastifiants, antioxydants, ignifugeants, lubrifiants ou colorants.

Le pré-mélange est ensuite malaxé à l'état fondu dans une extrudeuse-dégazeuse.

Des charges, telles que fibres de verre sont ajoutées dans l'extrudeuse pour être mélangées aux polyamides.

Cette extrudeuse est équipée d'une filière permettant de produire des joncs qui seront ensuite découpés sous forme de granulés. Les conditions d'extrusion ne sont pas critiques et sont celles classiquement utilisées dans le domaine de la fabrication de compositions ou compounds à base de polyamides. L'adaptation des conditions d'extrusion à la nature des polymères est habituelle pour un homme du métier.

Les granulés de compound obtenus sont ensuite refondus et injectés dans un moule pour ainsi obtenir des pièces moulées destinées à être assemblées par soudage.

Ces pièces ont une forme rectangulaire de dimensions 55mm x 55mm x 3,2mm. Les surfaces de soudure sont formées par un des côtés de la pièce.

Les conditions de moulage par injection sont celles classiquement utilisées. Leur adaptation à la composition thermoplastique de l'invention est évidente pour un homme du métier.

Deux pièces rectangulaires sont soudées l'une à l'autre au niveau d'un de leurs côtés par la technique de soudure par vibration.

Les paramètres du procédé de soudure sont :

- Fréquence de vibration : 240 Hz
- Amplitude : 1,8 mm
- Durée de vibration : 2 s
- Pression de soudure : 61 daN
- Durée de maintien : > 5 s
- Pression de maintien : 61 daN
- Profondeur d'enfoncement : 0,4mm - 1,2mm

On détermine ensuite les caractéristiques mécaniques de la soudure par mesure de la contrainte rupture en traction, sous atmosphère sèche (Eh0) avec une éprouvette comprenant une ligne de soudure. De manière analogue, on détermine la contrainte rupture en traction du matériau avec une éprouvette ne comprenant pas de ligne de soudure.

La comparaison de ces deux résultats permet de déterminer le taux d'efficacité de la soudure. Ce taux est exprimé par la formule :

$$\frac{\text{Contrainte de rupture éprouvette avec ligne de soudure}}{\text{Contrainte de rupture éprouvette sans ligne de soudure}} \times 100$$

Les mesures de contrainte à la rupture sont réalisées sur un appareil INSTROM® avec une vitesse de traction de 50 mm/min. sur une éprouvette de dimensions 115 x 15 x 3,2mm .

Les résultats obtenus avec plusieurs compositions conformes à l'invention (exemple 1 à 3) et des compositions de l'état de la technique (exemples A et B) sont indiqués dans le tableau I.

Les compositions 2 et 4 ont été obtenues avec une étape de post condensation de la composition à l'état solide par chauffage à une température de 180°C sous pression réduite pendant 22 heures pour l'exemple 2 et 8 heures pour l'exemple 4.

Tableau 1

| Exemples | | 1 | 2 | 3 | 4 | 5 [2] | A | B |
|---|---|---|---|---|---|---|---|---|
| Polymère semicristallin | Nature | PA 66 | PA 66 | PA 66 | PA 66 | PA 66 | PA 66 | PA 66 |
| | Iv [4] | 129 ml/g | 129 ml/g | 129 ml/g | 129 ml/g | 171 ml/g | 129 ml/g | 129 ml/g |
| | concentration | 53,4 % | 53,4 % | 53,4 % | 58,4 % | 53,3 % | 63,4 % | 53,4 % |
| Polyamide semi-aromatique amorphe | nature | TROGAMID T5000 | TROGAMID T5000 | PASA-1 | TROGAMID T5000 | PASA-1 | | PASA-2 |
| | concentration | 10 % | 10 % | 10 % | 5 % | 10% | | 10 % |
| charges | nature | Fibres de verre | Fibres de verre | Fibres de verre | Fibres de verre | Fibres de verre | Fibres de verre | Fibres de verre |
| | concentration | 35 % | 35 % | 35 % | 35 % | 35 % | 35 % | 35 % |
| additifs [3] | concentration | 1,6 % | 1,6 % | 1,6 % | 1,6 % | 1,6 % | 1,6 % | 1,6 % |
| Composition | Indice de viscosité [1] | 155 ml/g | 201 ml/g | 143 ml/g | 201 ml/g | 199 ml/g | 161 ml/g | 143 ml/g |
| Contrainte à la rupture à 23°C et Eh0 | Matériau | 209,2 MPa | 216,9 MPa | 214,7 MPa | 220,9 MPa | 225,3 MPa | 211,3 MPa | 206,6 MPa |
| | soudure | 66,2 MPa | 75,7 MPa | 65,4 MPa | 68,5MPa | 79,6 MPa | 60,5 MPa | 54,1 MPa |
| Efficacité soudure | | 31,6 % | 34,9 % | 31,6 % | 31 % | 35,3% | 28,6 % | 26,2 % |

[1] Indice de viscosité de la composition mesuré dans le méta-crésol
[2] Addition de 0,12 % de TNPP (trinonylphénylphosphate) comme catalyseur de polycondensation
[3] Les additifs comprennent des lubrifiants, colorants, pigments, stabilisants.
[4] Indice de viscosité du polyamide semicristallin mesuré dans l'acide formique

Le Trogamid T5000( nom commercial ) est un polyamide semi-aromatique amorphe commercialisé par la Société Dynamit Nobel. Ce polyamide est un polycondensat d'acide téréphtalique et de triméthylhexaméthylène diamine.

6

Le polyamide amorphe 1 (PASA-1) est un polycondensat d'acides isophtalique et téréphtalique avec de l'hexaméthylène diamine.

Le polyamide semi-aromatique (PASA-2) est un polyamide semicristallin obtenu par polycondensation d'acides isophtalique et téréphtalique avec de l'hexaméthylène diamine.

La résistance au vieillissement du matériau par mesure de l'évolution de la résistance à la rupture en traction d'une éprouvette après exposition dans l'air à une température de 150°C a été déterminé sur une éprouvette contenant une ligne de soudure et une éprouvette réalisée avec la même composition mais sans ligne de soudure.

Cette mesure a été réalisée avec des éprouvettes réalisées avec le matériau de l'exemple 3, et des éprouvettes réalisées avec le matériau de l'exemple 6.

L'évolution de la résistance à la rupture en traction (R) est exprimé en

pourcentage et représenté par le rapport $\dfrac{Rt}{Ro}$

Rt représentant la résistance à la rupture après un temps t de vieillissement
Ro représentant la résistance à la rupture initiale

| t heure | Matériau de l'exemple 3 | | Matériau de l'exemple 6 (comparatif) | |
|---|---|---|---|---|
| | avec ligne de soudure | sans ligne de soudure | avec ligne de soudure | sans ligne de soudure |
| 0 | 100 | 100 | 100 | 100 |
| 100 | 110 | 110 | 105 | 110 |
| 1000 | 108 | 101 | 90 | 95 |
| 2000 | 100 | 85 | 60 | 90 |

Un essai de réalisation d'une boite de forme cubique par injection de deux moitiés de boites puis soudage des deux moitiés. La ligne de soudure est située au milieu des faces du cube. Le cube a comme dimensions 160 mm x 110 mm x 60 mm.

Après soudage selon les caractéristiques indiquées précédemment la résistance à l'éclatement de la boite est testée par injection d'air par une entrée prévue sur une des faces du cube. La pièce est mise en température puis maintien pendant 15 minutes à 110°C, puis de l'air est injecté pour obtenir une pression de 5 bars au bout de 1 minute. La pression est ensuite augmentée de 0,2 bar en 30 secondes.

Une pièce moulée avec la composition de l'exemple " éclate pour une pression de l'ordre de 13 bars. Une pièce moulée avec la composition de l'exemple 6 (comparatif) éclate à une pression de l'ordre de 7 bars.

Ces essais montrent un gain de résistance de la ligne de soudure de l'ordre de 40 % avec le procédé selon l'invention.

**Revendications**

1. Procédé d'assemblage de pièces pour la réalisation d'articles par soudage desdites pièces, celles-ci comprenant au moins une surface de soudure réalisée en une composition à base de matières thermoplastiques appartenant à la famille des polyamides, consistant à porter les dites surfaces de soudure à une température au moins supérieure à la température de ramollissement de ladite composition thermoplastique, à mettre en contact les surfaces de soudure avant, après ou de manière concomitante au chauffage des surfaces à souder, caractérisé en ce que la composition thermoplastique pour former les surfaces de soudure comprend comme matières thermoplastiques au moins un polyamide semicristallin et au moins un polyamide semi-aromatique amorphe, la concentration en polyamide semi-aromatique amorphe est comprise entre 5 % et 40 % en poids par rapport au poids total de matières thermoplastiques.

2. Procédé selon la revendication 1, caractérisé en ce que la concentration en polyamide semi-aromatique amorphe est comprise entre 5 % et 25 % par rapport au poids total de matières thermoplastiques.

3. Procédé selon la revendication 1 ou 2, caractérisé en ce que la composition thermoplastique a un indice de viscosité supérieur à 150 ml/g, l'indice étant mesuré par sur une solution contenant 0,5g de polyamide soluble dans 100ml de méta-crésol selon la norme ISO 307-1984.

4. Procédé selon la revendication 3, caractérisé en ce que la composition thermoplastique a un indice de viscosité compris entre 160 et 230 ml/g.

5. Procédé selon l'une des revendications précédentes, caractérisé en ce que la composition comprend des charges de renforcement choisies dans le groupe comprenant des charges minérales fibreuses ou en poudre telles que fibres de verre, de carbone, talc, mica, kaolin ou un mélange de celles-ci.

6. Procédé selon l'une des revendications précédentes, caractérisé en ce que la composition comprend des charges de renforcement ou de remplissage choisies dans le groupe comprenant des charges telles que fibres en matières synthétiques thermodurcissables ou présentant un point de fusion supérieur à 325°C.

7. Procédé selon l'une des revendications précédentes, caractérisé en ce que la composition comprend des additifs choisis dans le groupe comprenant les stabilisants, plastifiants, antioxydants, ignifugeants, colorants, lubrifiants.

8. Procédé selon l'une des revendications précédentes, caractérisé en ce que le polyamide semicristallin est choisi dans le groupe comprenant les polyamides obtenus soit par polycondensation de diacides carboxyliques avec des diamines biprimaires, soit par homopolycondensation d'acide $\omega$-aminoalcanoïques ou par polycondensation de diacides carboxyliques, diamines primaires et d'acide $\omega$-aminoalcanoïques.

9. Procédé selon la revendication 8, caractérisé en ce que le polyamide semicristallin est choisi dans le groupe comprenant Nylon 4,6; Nylon 6,6 ; Nylon 6,9 ; Nylon 6,10 ; Nylon 6,12 ; Nylon 4 ; Nylon 6 ; Nylon 11 ; Nylon 12 ou leurs copolyamides.

10. Procédé selon l'une des revendications précédentes, caractérisé en ce que le polyamide semi-aromatique amorphe est un polycondensat d'au moins un diacide aromatique avec une diamine aliphatique.

11. Procédé selon la revendication 10, caractérisé en ce que le diacide aromatique est choisi parmi l'acide isophtalique, l'acide téréphtalique ou leurs mélanges.

12. Procédé selon la revendication 10 ou 11, caractérisé en ce que la diamine aliphatique est choisie dans le groupe comprenant l'hexaméthylène diamine, la triméthylhexaméthylène diamine, la méthyl-2 pentaméthylène diamine ou leurs mélanges.

13. Procédé selon l'une des revendications précédentes, caractérisé en ce que la soudure est réalisée par une technique de soudure par vibration.

14. Procédé selon l'une des revendications 1 à 12, caractérisé en ce que la soudure est réalisée par la technique de soudure par ultrasons.

15. Procédé selon l'une des revendications 1 à 12, caractérisé en ce que la soudure est réalisée par la technique de soudure par miroirs chauffants.

16. Procédé selon l'une des revendications 1 à 12, caractérisé en ce que la soudure est réalisée par la technique de soudure de chauffage par Infrarouges.

## Claims

1. Process for joining parts for producing articles by welding the said parts, the latter comprising at least one welding surface made of a composition based on thermoplastics belonging to the polyamide family, consisting in bringing the said welding surfaces to a temperature at least greater than the softening temperature of the said thermoplastic composition, in bringing the welding surfaces into contact with each other before, after or concomitantly with the heating of the surfaces to be welded, characterized in that the thermoplastic composition for forming the welding surfaces comprises, as thermoplastics, at least one semicrystalline polyamide and at least one amorphous semi-aromatic polyamide, the concentration of amorphous semi-aromatic polyamide is between 5% and 40% by weight with respect to the total weight of thermoplastics.

**2.** Process according to Claim 1, characterized in that the concentration of amorphous semi-aromatic polyamide is between 5% and 25% with respect to the total weight of thermoplastics.

**3.** Process according to Claim 1 or 2, characterized in that the thermoplastic composition has a viscosity index greater than 150 ml/g, the index being measured by on a solution containing 0.5 g of soluble polyamide in 100 ml of *m*-cresol according to the ISO 307-1984 standard.

**4.** Process according to Claim 3, characterized in that the thermoplastic composition has a viscosity index of between 160 and 230 ml/g.

**5.** Process according to one of the preceding claims, characterized in that the composition comprises reinforcing fillers chosen from the group comprising fibrous or powdered mineral fillers, such as glass fibres, carbon fibres, talc, mica, kaolin or a mixture of these fillers.

**6.** Process according to one of the preceding claims, characterized in that the composition comprises reinforcing fillers or fillers for filling, these being chosen from the group comprising fillers such as fibres made of thermosetting synthetic materials or materials having a melting point of greater than 325°C.

**7.** Process according to one of the preceding claims, characterized in that the composition comprises additives chosen from the group comprising stabilizers, plasticizers, antioxidants, fire retardants, colorants and lubricants.

**8.** Process according to one of the preceding claims, characterized in that the semicrystalline polyamide is chosen from the group comprising polyamides obtained either by polycondensation of dicarboxylic acids with biprimary diamines or by homopolycondensation of $\omega$-aminoalkanoic acid or by polycondensation of dicarboxylic acids, primary diamines and of $\omega$-aminoalkanoic acid.

**9.** Process according to Claim 8, characterized in that the semicrystalline polyamide is chosen from the group comprising nylon-4,6; nylon-6,6; nylon-6,9; nylon-6,10; nylon-6,12; nylon-4; nylon-6; nylon-11; nylon-12 or their copolyamides.

**10.** Process according to one of the preceding claims, characterized in that the amorphous semi-aromatic polyamide is a polycondensate of at least one aromatic diacid with an aliphatic diamine.

**11.** Process according to Claim 10, characterized in that the aromatic diacid is chosen from isophthalic acid, terephthalic acid or mixtures thereof.

**12.** Process according to Claim 10 or 11, characterized in that the aliphatic diamine is chosen from the group comprising hexamethylenediamine, trimethylhexamethylenediamin, methyl-2-pentamethylenediamine or mixtures thereof.

**13.** Process according to one of the preceding claims, characterized in that the welding is carried out by a technique of vibration welding.

**14.** Process according to one of Claims 1 to 12, characterized in that the welding is carried out by the technique of ultrasonic welding.

**15.** Process according to one of Claims 1 to 12, characterized in that the welding is carried out by the technique of hot-plate welding.

**16.** Process according to one of Claims 1 to 12, characterized in that the welding is carried out by the technique of welding using infrared heating.

**Patentansprüche**

**1.** Verfahren zum Zusammensetzen von Teilen für die Herstellung von Artikeln durch Verschweißen der genannten Teile, die mindestens eine Schweißfläche umfassen und realisiert wurden aus einer Zusammensetzung auf der Basis von thermoplastischen Materialien aus der Familie der Polyamide, wobei das Verfahren darin besteht, die genannten Schweißflächen auf einer Temperatur von mindestens oberhalb der Erweichungstemperatur der genannten thermoplastischen Zusammensetzung zu halten und die Schweißflächen vor, nach oder gleichzeitig mit ihrem Erhitzen in Kontakt zu bringen, dadurch gekennzeichnet, daß die thermoplastische Zusammensetzung zur Bildung der Schweißflächen als thermoplastisches Material mindestens ein semikristallines Polyamid und mindestens ein amorphes, semi-aromatisches Polyamid umfaßt, wobei die Konzentration an amorphem, semi-aromatischem Polyamid zwischen 5 Gew.-% und 40 Gew.-% beträgt, bezogen auf das Gesamtgewicht des thermoplastischen Materials.

2. Verfahren nach Anspruch 1, dadurch gekennzeichnet, daß die Konzentration an amorphem, semi-aromatischem Polyamid zwischen 5 % und 25 % beträgt, bezogen auf das Gesamtgewicht des thermoplastischen Materials.

3. Verfahren nach Anspruch 1 oder 2, dadurch gekennzeichnet, daß die thermoplastische Zusammensetzung einen Viskositätsindex von höher als 150 ml/g besitzt, wobei der Index an einer Lösung gemessen wird, die 0,5 g lösliches Polyamid in 100 ml meta-Kresol enthält, gemäß der Norm ISO 307-1984.

4. Verfahren nach Anspruch 3, dadurch gekennzeichnet, daß die thermoplastische Zusammensetzung einen Viskositätsindex zwischen 160 ml/g und 230 ml/g besitzt.

5. Verfahren nach einem der vorstehenden Ansprüche, dadurch gekennzeichnet, daß die Zusammensetzung Einsatzstoffe zur Verstärkung umfaßt, gewählt aus der faserförmige oder pulverförmige mineralische Einsatzstoffe wie Glasfasern, Kohlenstoffasern, Talk, Glimmer, Kaolin oder deren Mischungen umfassenden Gruppe.

6. Verfahren nach einem der vorstehenden Ansprüche, dadurch gekennzeichnet, daß die Zusammensetzung Einsatzstoffe zur Verstärkung oder zum Auffüllen umfaßt, gewählt aus der Einsatzstoffe wie Fasern aus thermohärtbaren synthetischen Materialien oder solche mit einem Schmelzpunkt von hoher als 325 °C umfassenden Gruppe.

7. Verfahren nach einem der vorstehenden Ansprüche, dadurch gekennzeichnet, daß die Zusammensetzung Zusatzstoffe umfaßt, gewählt aus der Stabilisatoren, Weichmacher, Antioxidantien, Flammschutzmittel, Farbstoffe und Schmiermittel umfassenden Gruppe.

8. Verfahren nach einem der vorstehenden Ansprüche, dadurch gekennzeichnet, daß das semikristalline Polyamid aus der Gruppe gewählt wird, die Polyamide umfaßt, entweder erhalten durch Polykondensation von Dicarbonsäuren mit biprimären Diaminen, oder durch Homopolykondensation von $\omega$-Aminoalkansäure oder durch Polykondensation von Dicarbonsäuren, primären Diaminen und $\omega$-Aminoalkansäure.

9. Verfahren nach Anspruch 8, dadurch gekennzeichnet, daß das semikristalline Polyamid aus der Gruppe gewählt wird, die Nylon 4,6; Nylon 6,6; Nylon 6,9; Nylon 6,10; Nylon 6,12; Nylon 4; Nylon 6; Nylon 11; Nylon 12 oder ihre Copolyamide umfaßt.

10. Verfahren nach einem der vorstehenden Ansprüche, dadurch gekennzeichnet, daß das amorphe, semi-aromatische Polyamid ein Polykondensat von mindestens einer aromatischen Disäure mit einem aliphatischen Diamin ist.

11. Verfahren nach Anspruch 10, dadurch gekennzeichnet, daß die aromatische Disäure unter Isophthalsäure, Terephthalsäure und deren Mischungen ausgewählt wird.

12. Verfahren nach Anspruch 10 oder 11, dadurch gekennzeichnet, daß das aliphatische Diamin aus der Gruppe gewählt wird, die Hexamethylendiamin, Trimethylhexamethylendiamin, 2-Methyl-pentamethylendiamin oder deren Mischungen umfaßt.

13. Verfahren nach einem der vorstehenden Ansprüche, dadurch gekennzeichnet, daß das Verschweißen durch eine Schweißtechnik mittels Schwingung realisiert wird.

14. Verfahren nach einem der Ansprüche 1 bis 12, dadurch gekennzeichnet, daß das Verschweißen durch die Schweißtechnik mittels Ultraschall realisiert wird.

15. Verfahren nach einem der Ansprüche 1 bis 12, dadurch gekennzeichnet, daß das Verschweißen durch die Schweißtechnik mittels beheizbarer Spiegel realisiert wird.

16. Verfahren nach einem der Ansprüche 1 bis 12, dadurch gekennzeichnet, daß das Verschweißen durch die Schweißtechnik mittels Erhitzen durch Infrarot realisiert wird.